# EUROPÄISCHE PATENTSCHRIFT

(11) **EP 1 384 047 B1**
(45) Veröffentlichungstag und Bekanntmachung des Hinweises auf die Patenterteilung: **19.10.2016**
(21) Anmeldenummer: 02740250.2
(22) Anmeldetag: 12.04.2002
(51) Int. Cl.: G01F 15/12, G01F 1/684

(54) **LUFTSTROMMESSER MIT VORRICHTUNG ZUR AUSSEPARIERUNG VON FREMDPARTIKELN**
DEVICE FOR DETERMINING AT LEAST ONE PARAMETER OF A MEDIUM FLOWING IN A CONDUIT
DISPOSITIF POUR DETERMINER AU MOINS UN PARAMETRE RELATIF A UN FLUIDE CIRCULANT DANS UNE CONDUITE

(30) Priorität: 20.04.2001 DE 10119699; 19.07.2001 DE 10135142
(43) Veröffentlichungstag der Anmeldung: 28.01.2004
(73) Patentinhaber: ROBERT BOSCH GMBH, 70442 Stuttgart (DE)
(72) Erfinder: RENNINGER, Erhard, 71706 Markgroeningen (DE); LENZING, Thomas, 71726 Benningen (DE); FISCHER, Manfred, 71570 Oppenweiler (DE); KONZELMANN, Uwe, 71679 Asperg (DE); SIPPEL, Markus, 71701 Schwieberdingen (DE)
(86) Internationale Anmeldenummer: PCT/DE2002/001363
(87) Internationale Veröffentlichungsnummer: WO 2002/086425

(56) Entgegenhaltungen:
- EP-A- 0 369 592
- EP-A- 1 091 195
- WO-A-99/53274
- PATENT ABSTRACTS OF JAPAN vol. 2000, no. 14, 5. März 2001 (2001-03-05) -& JP 2000 304585 A (HITACHI LTD;HITACHI CAR ENG CO LTD), 2. November 2000 (2000-11-02)

## Beschreibung

### Stand der Technik

Die Erfindung geht aus von einer Vorrichtung nach der Gattung des Anspruchs 1.

Aus der DE 196 23 334 A1 bzw. US-PS 6,148,663 ist eine Vorrichtung zur Bestimmung der Masse eines in einer Leitung strömenden Mediums bekannt, bei der in einem Bypasskanal eine Ausscheidungsöffnung vorhanden ist. In dem Medium vorhandene Flüssigkeits- oder Festkörperpartikel strömen jedoch bei dieser Vorrichtung zuerst am Messelement vorbei und können dieses verschmutzen und beschädigen, um dann zum Teil durch die Ausscheidungsöffnung in die Leitung zurückzuströmen.

Die DE 198 15 654 A1 zeigt eine Vorrichtung zur Bestimmung der Masse eines in einer Leitung strömenden Mediums, bei dem im Bypasskanal eine Trennstelle vorhanden ist. Die Trennstelle wird durch eine Trennwand gebildet, die den Bypasskanal in einen Messkanal und einen Umgehungskanal aufteilt.

Die US-PS 4,914,947 zeigt eine Vorrichtung zur Bestimmung der Masse eines in einer Leitung strömenden Mediums, bei der aufgrund von Zentrifugalkräften Verunreinigungen im strömenden Medium an Aussenwände gedrängt werden und so nicht in den Messkanal gelangen sollen. Bei geringer oder nachlassender (Abstellen der Brennkraftmaschine) Strömung können insbesondere Flüssigkeitsteilchen aufgrund der Schwerkraft in die Eingangsöffnung des Messkanals und damit zum Messelement gelangen und dieses verschmutzen.

Die US-PS 3,314,290 zeigt einen Bypasskanal eines Durchflussmessers, der sich in zwei Ausgangskanäle aufteilt, die in eine Leitung zurückmünden. Die Ausgangsöffnung der Ausgangskanäle ist jedoch so angeordnet, dass ein in dem Bypasskanal strömendes Medium die Ausgangsöffnung in paralleler Richtung zur Hauptströmungsrichtung in der Leitung verlässt.

Die US-PS 4,887,577 zeigt einen Bypasskanal eines Luftdurchflussmessers, der sich an einer Trennstelle in zwei Ausgangskanäle aufteilt, wobei an der Trennstelle ein abgerundeter Vorsprung vorhanden ist. Sensoren des Luftdurchflussmessers sind jedoch ungeschützt im Bypasskanal angeordnet.

Die US-PS 5,467,648 zeigt Vorsprünge an einer Außenwand eines Messgehäuses, die strömungsaufwärts von seitlichen Ausgangsöffnungen eines Bypasskanals im Messgehäuse angeordnet sind. Sensoren des Luftdurchflussmessers sind jedoch ungeschützt s.o. im Bypasskanal angeordnet.

Die US-PS 4,403,506 zeigt einen Luftmassenmesser mit einem keilförmigen Körper, der in einem strömenden Medium angeordnet ist und das Medium in zwei Teilströme unterteilt. Die WO 99/53274 offenbart eine Messvorrichtung zum Messen der Masse eines in einer Leitung strömenden Mediums, bei dem der sich ein Strömungskanal der Messvorrichtung zwischen einer Einlassöffnung und dem Messelement an einer Trennstelle in einen Messkanal und einen Umgehungskanal verzweig.

### Vorteile der Erfindung

Die erfindungsgemäße Vorrichtung mit den kennzeichnenden Merkmalen des Anspruchs 1 hat demgegenüber den Vorteil, dass auf einfache Art und Weise Flüssigkeits- und/oder Festkörperpartikel nicht in den Messkanal gelangen können.

Dies wird erreicht, indem das strömende Medium sich in einem Eingangsbereich vollständig in zwei Teilströme aufteilt, und dass der erste Teilstrom vollständig in den Messkanal strömt, und dass der zweite Teilstrom vollständig durch zumindest eine Ausscheidungsöffnung strömt, dass die Eintrittsöffnung in der axialen Richtung, die senkrecht zur Hauptströmungsrichtung ist, eine obere Begrenzung hat, die dem Messelement am nächsten ist, und dass eine obere Ebene, die senkrecht zur axialen Richtung und parallel zur Hauptströmungsrichtung liegt, durch die obere Begrenzung der Eintrittsöffnung verläuft, und der Bypasskanal im Bereich der Eintrittsöffnung durch eine Umlenkverjüngung mittels einer Nase so gestaltet ist, dass das einströmende Medium von der oberen Ebene weggelenkt wird, derart dass die Flüssigkeits- und/oder Festkörperteilchen, die grösser sind und eine höhere Dichte als das strömende Medium aufweisen, sich in axialer Richtung von der oberen Ebene wegbewegen und dass die Ausscheidungsöffnung unterhalb der oberen Ebene angeordnet ist, um die Flüssigkeits- und Festkörperpartikel im Bereich der Ausscheidungsöffnung zu sammeln.

Durch die in den abhängigen Ansprüchen aufgeführten Massnahmen sind vorteilhafte Weiterbildungen und Verbesserungen der im Anspruch 1 genannten Vorrichtung möglich.

Wenn im Eingangshereich oder in der Rintrittsöffnung eine Trennstelle vorhanden ist, kann das in den Bypasskanal einströmende Medium auf vorteilhafte Weise umgelenkt werden, so dass in den Bypasskanal einströmende Flüssigkeits- oder Festkörperpartikel von der Messkanaleintrittsöffnung weggelenkt werden und deshalb nicht in den Messkanal gelangen, sondern zur Ausscheidungsöffnung hin gelenkt werden.

Es ist vorteilhaft, wenn in einem Eingangsbereich des Bypasskanals eine Abrisskante vorhanden ist, so dass kein Flüssigkeitsfilm über eine Bypasskanalinnenwandfläche in den Messkanal gelangen kann, weil der Flüssigkeitsfilm durch die Abrisskante abgelöst wird.

Zur Verbesserung des Messergebnisses verjüngt sich der Messkanal im Bereich des Messelements.
Wenn im strömungsabwärtigen Bereich des Eingangsbereichs ein Keil vorhanden ist, kann auf vorteilhafte Weise eine bessere Ablenkung der Wasser- und Festkörperpartikel zu den Ausscheidungsöffnungen erreicht und verhindert werden, dass sich Wasser oder Festkörperpartikel an einer Stauwand im strömungsabwärtigen Bereich ansammeln.

Weiterhin wird durch die vorteilhafte Einstellung eines Sogeffekts erreicht, dass Wasser und/oder Festkörperpartikel verstärkt aus dem strömungsabwärtigen Ende des Eingangsbereichs herausgesaugt werden. Dies geschieht dadurch, dass an einer äusseren Seitenfläche eines Messgehäuses strömungsaufwärts der Ausscheidungsöffnung zumindest ein Vorsprung an der Seitenfläche ausgebildet ist.

### Zeichnung

Ausführungsbeispiele der Erfindung sind in der Zeichnung vereinfacht dargestellt und in der nachfolgenden Beschreibung näher erläutert.

Es zeigen
Figur 1a ein erstes Ausführungsbeispiel einer erfindungsgemäss ausgebildeten Vorrichtung, Figur 1b einen Schnitt entlang der Linie B-B in Figur 1a,
Figur 2 ein zweites Ausführungsbeispiel einer erfindungsgemäss ausgebildeten Vorrichtung,
Figur 3 ein drittes Ausführungsbeispiel einer erfindungsgemäss ausgebildeten Vorrichtung, und
Figur 4 einen Schnitt entlang der Linie IV-IV der Figur 3.

### Beschreibung der Ausführungsbeispiele

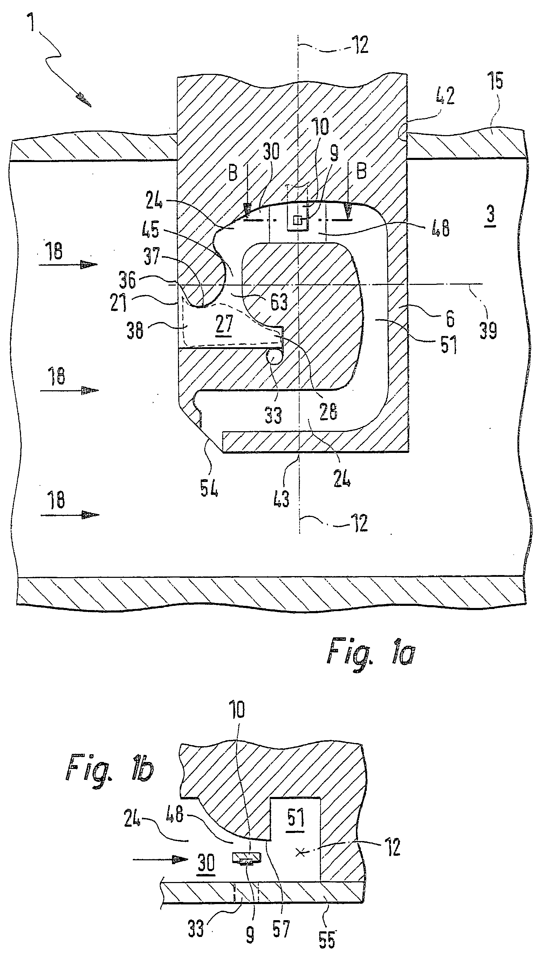

Figuren 1a und 1b zeigen, wie eine erfindungsgemässe Vorrichtung 1 in einer Leitung 3, in der das Medium strömt, eingebaut ist.

Die Vorrichtung 1 zur Bestimmung zumindest eines Parameters des Mediums besteht aus einem Messgehäuse 6 und einem nicht näher dargestellten Trägerteil, in dem z.B. eine Auswerteelektronik untergebracht ist.

Das Messgehäuse 6 mit dem Trägerteil ist in eine Wandung 15 der Leitung 3 durch eine Einstecköffnung 42 beispielsweise steckbar eingeführt. Die Wandung 15 begrenzt einen Strömungsquerschnitt der Leitung 3.

Das Trägerteil ist dabei bspw. der Einstecköffnung 42 am nächsten, wobei die Auswerteelektronik innerhalb und/oder ausserhalb des Strömungsquerschnittes der Leitung 3 liegen kann.

Beispielsweise wird in der Vorrichtung 1 ein Messelement 9 auf einem Messelemententräger 10 verwendet, das beispielsweise als Parameter den Volumenstrom des strömenden Mediums bestimmt. Weitere Parameter, die gemessen werden können, sind beispielsweise der Druck, Temperatur, eine Konzentration eines Mediumbestandteils oder eine Strömungsgeschwindigkeit, die mittels geeigneter Sensoren bestimmt werden.

Das Messgehäuse 6 und das Trägerteil haben beispielsweise eine gemeinsame Längsachse 12 in axialer Richtung, die beispielsweise in Einbaurichtung der Vorrichtung 1 in die Leitung 3 verläuft und die z.B. auch die Mittelachse sein kann.

Die Richtung des strömenden Mediums, im folgenden als Hauptströmungsrichtung bezeichnet, ist durch entsprechende Pfeile 18 in der Zeichnung gekennzeichnet und verläuft dort von links nach rechts.

Das Messgehäuse 6 beinhaltet einen Bypasskanal 24, der bspw. strömungsaufwärts am Messgehäuse 6 eine Eintrittsöffnung 21 aufweist, die beispielsweise senkrecht zur Hauptströmungsrichtung 18 ausgerichtet ist. Jede andere Orientierung der Eintrittsöffnung 21 zur Hauptströmungsrichtung 18 ist denkbar. Durch die Eintrittsöffnung 21 strömt das Medium in den Bypasskanal 24 ein und gelangt dort in einen Eingangsbereich 27, der in der Figur 1a durch eine gestrichelte Linie umrandet ist. Von dem Eingangsbereich 27 aus gelangt das Medium ausschliesslich entweder in einen Messkanal 30 mit dem Messelement 9 oder strömt durch zumindest eine Ausscheidungsöffnung 33, die zur Leitung 3 offen ist.

Wenn das strömende Medium also in den Eingangsbereich 27 gelangt, teilt es sich dort vollständig und ausschliesslich in zwei Teilströme auf. Der erste Teilstrom strömt vollständig in den Messkanal 30 und der zweite Teilstrom strömt vollständig durch zumindest eine Ausscheidungsöffnung 33. Es gibt keine weiteren Kanäle, die vom Messkanal abzweigen.

In dem strömenden Medium sind beispielsweise Flüssigkeits- und/oder Festkörperpartikel vorhanden, die das Messelement 9 verschmutzen und/oder beschädigen können.

Der Eingangsbereich 27 hat deshalb bspw. an seinem strömungsabwärtigen Ende 28 eine Verbindung zu zumindest einer Ausscheidungsöffnung 33, durch die die Flüssigkeits- und Festkörperpartikel wieder in die Leitung 3 zurückströmen. Die Ausscheidungsöffnung 33 ist nicht am strömungsabwärtigen Ende des Messgehäuses 6 angeordnet. Die Ausscheidungsöffnung 33 liegt bspw. in der Zeichnungsebene, d.h. ist seitlich am Messgehäuse 6 angeordnet, so dass die Hauptströmungsrichtung 18 in der Ebene verläuft, in der die Ausscheidungsöffnung 33 angeordnet ist. Die Ebene, in der die Ausscheidungsöffnung 33 angeordnet ist, kann auch unter einem von null Grad verschiedenen Winkel zur Hauptströmungsrichtung 18 angeordnet sein.

Die Eintrittsöffnung 21 hat in axialer Richtung 12 eine obere Kante 36, die dem Messelement 9 in axialer Richtung 12 am nächsten ist. Eine obere Ebene 39 verläuft durch die obere Kante 36 sowie senkrecht zur Zeichnungsebene und parallel zur Hauptströmungsrichtung 18. Die Ausscheidungsöffnung 33 ist in axialer Richtung 12 unterhalb dieser oberen Ebene 39 angeordnet, d.h. in axialer Richtung 12 einem axialen Ende 43 des Messgehäuses 6 zugewandt. Der Bypasskanal 24 ist im Bereich der Eintrittsöffnung 21 bspw. durch eine Umlenkverjüngung 38 mittels einer Nase 37 so gestaltet, dass das einströmende Medium von der oberen Ebene 39 weggelenkt wird.

Da die Flüssigkeits- und/oder Festkörperteilchen grösser sind und eine höhere Dichte als das gasförmige strömende Medium aufweisen, bewegen sie sich in axialer Richtung 12 von der oberen Ebene 39 weg. Da die Ausscheidungsöffnung 33 unterhalb der oberen Ebene 39 angeordnet ist, sammeln sich die Flüssigkeits- und Festkörperpartikel im Bereich der Ausscheidungsöffnung 33 und werden durch die vorbeiströmende Luft in der Leitung 3 in die Leitung 3 herausgesaugt.

Ausgehend von dem Eingangsbereich 27 stromabwärts dessen Umlenkverjüngung 38 erstreckt sich der Messkanal 30 bspw. zuerst in axialer Richtung 12 hin zur Einstecköffnung 42. Am Anfang des Messkanals 30 in der Nähe des Eingangsbereichs 27 ist eine erste Verjüngung 45 des Messkanals 30 vorhanden, die eine Beschleunigung des strömenden Mediums bewirkt, wodurch die Luft aus dem Eingangsbereich 27 abgesaugt wird. Hinter der ersten Verjüngung 45 wird das strömende Medium im Messkanal 30 umgelenkt und strömt dann bspw. etwa in Hauptströmung 18 an dem Messelement 9 vorbei.

Im Bereich des Messelements 9 ist beispielsweise eine zweite Verjüngung 48 des Messkanals 30 vorhanden. Die erste bzw. zweite Verjüngung 45 bzw. 48 kann durch allseitige oder teilweise Verengung der Seitenflächen des Messkanals 30 erfolgen.

Strömungsabwärts des Messelements 9 strömt das Medium in einen Umlenkkanal 51 der sich bspw. zuerst in axialer Richtung 12 von der Einstecköffnung 42 weg erstreckt, dann umgelenkt beispielsweise entgegen der Hauptströmungsrichtung 18 verläuft und schliesslich an einer Austrittsöffnung 54, die bspw. senkrecht zur Hauptströmungsrichtung 18 oder unter einem von null Grad verschiedenen Winkel zur Hauptströmungsrichtung 18 angeordnet ist, in die Leitung 3 mündet. Der Messkanal 30 und der Umlenkkanal 51 sind also bspw. C-förmig ausgebildet, wobei die Öffnung der C-Form der Hauptströmungsrichtung 18 zugewandt ist.

Figur 1b zeigt in einem Schnitt entlang der Linie B-B der Figur 1a den Bereich um das Messelement 9. Die zweite Verjüngung 48 wird dadurch erreicht, dass bspw. eine Wandung 57 des Messkanals 30 beispielsweise stromlinienförmig den Querschnitt des Messkanals 30 verengt. Strömungsabwärtig des Messelements 9 vergrössert sich der Querschnitt des Messkanals 30 abrupt. Danach strömt das Medium in Axialrichtung 12 in den Umlenkkanal 51.

Das Messgehäuse 6 wird bspw. durch eine Platte 55 verschlossen, die in einer Richtung senkrecht zur Zeichnungsebene gesehen gegenüber der gezeigten Ausscheidungsöffnung 33 eine weitere Ausscheidungsöffnung 33 aufweist.

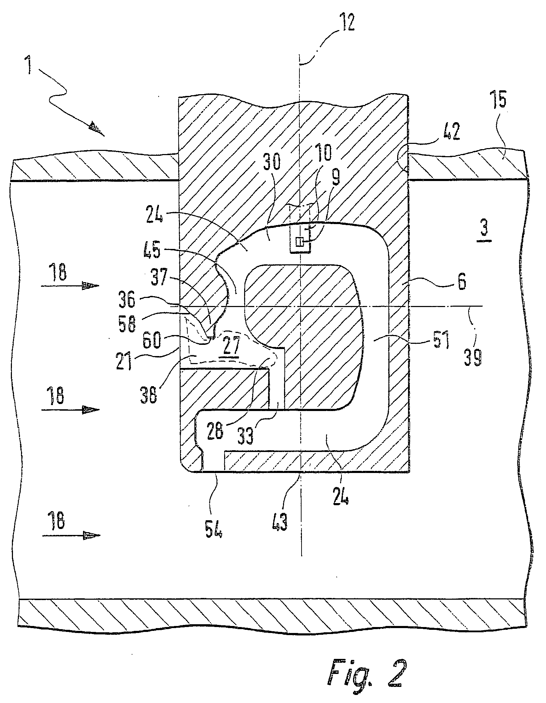

Figur 2 zeigt ein zweites Ausführungsbeispiel der erfindungsgemässen Vorrichtung 1.

In diesem Ausführungsbeispiel ist beispielsweise keine zweite Verjüngung im Bereich des Messelements 9 vorgesehen. Der Querschnitt des Bypasskanals 24 verjüngt sich ausgehend von der Eintrittsöffnung 21 in Hauptströmungsrichtung 18. Strömungsabwärts der Eintrittsöffnung 21 im Bereich der oberen Ebene 39 an einer Bypasskanalinnenfläche 58 ist eine zum axialen Ende 43 weisende Abrisskante 60 vorhanden. In den Bypasskanal 24 einströmende Flüssigkeitsteilchen können auf einer Innenwandung 58 des Bypasskanals 24 einen Flüssigkeitsfilm bilden, der auch beispielsweise entgegen der Schwerkraft in den Messkanal 30 gelangen kann. Um dies zu verhindern, wird die Abrisskante 60 im Bereich einer Messkanaleintrittsöffnung 63 angeordnet, die bewirkt, dass ein eventuell vorhandener Flüssigkeitsfilm von der Wandung abreisst und kein Flüssigkeitsfilm in den Messkanal 30 gelangen kann. Die Flüssigkeitsteilchen, die durch den Abriss des Flüssigkeitsfilm an der Abrisskante 60 entstehen, strömen durch die Gestaltung des Eingangsbereichs 27 im Bereich der Eintrittsöffnung 21 in Richtung der Ausscheidungsöffnung 33.

Die Ausscheidungsöffnung 33 verbindet in diesem Ausführungsbeispiel den Eingangsbereich 27 mit dem Umlenkkanal 51.

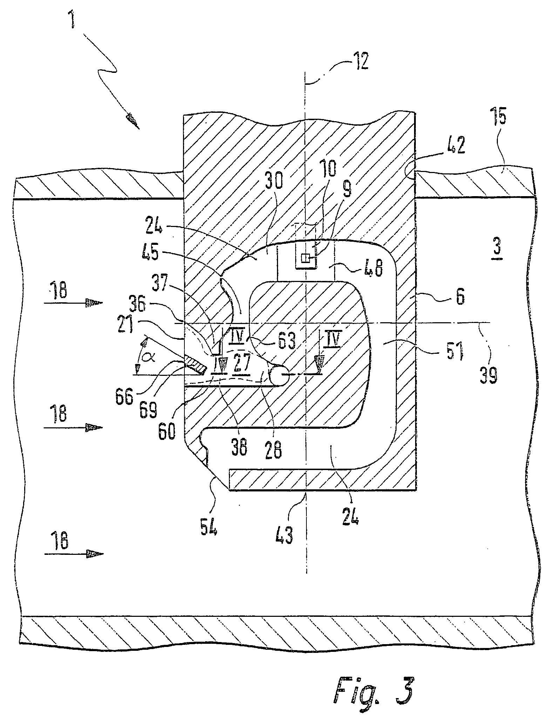

Figur 3 zeigt ein drittes Ausführungsbeispiel der erfindungsgemässen Vorrichtung 1.

Im Eingangsbereich 27 ist zumindest eine Trennwand 69 angeordnet, die sich ausgehend von der Eintrittsöffnung 21 oder auch strömungsabwärts der Eintrittsöffnung 21 zumindest teilweise in den Eingangsbereich 27 erstreckt. Die beispielsweise plättchenförmig ausgebildete Trennwand 69 hat strömungsaufwärts eine Trennstelle 66 und bildet mit der Hauptströmungsrichtung 18 einen von null Grad verschiedenen Schnittwinkel α. Durch diese Querstellung der Trennwand 69 zum strömenden Medium wird das in die Eintrittsöffnung 21 einströmende Medium gezielt von der Messkanaleintrittsöffnung 63 weggelenkt und zur Ausscheidungsöffnung 33 hingelenkt. So wird in verstärkter Weise erreicht, dass Flüssigkeits- oder Festkörperpartikel nicht in den Messkanal 30 gelangen können.

In den einzelnen Figuren sind gleiche und gleichwirkende Teile durch die gleichen Bezugszeichen gekennzeichnet.

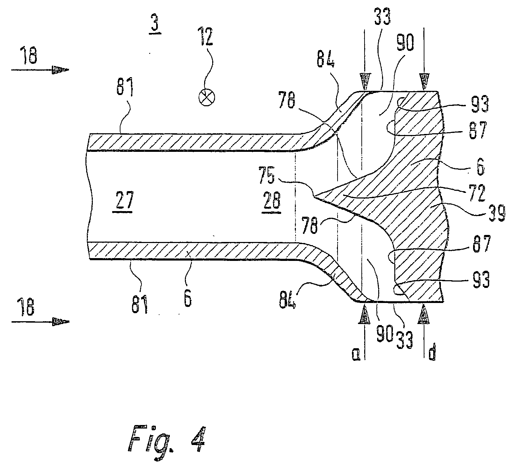

Figur 4 zeigt in einem Schnitt entlang der Linie IV-IV der Figur 3 ein weiteres Ausführungsbeispiel einer erfindungsgemäß ausgebildeten Vorrichtung 1.

Im strömungsabwärtigen Bereich 28 des Eingangsbereichs 27 ist ein Keil 72 an einer Messgehäuseinnenwand 87 angeordnet, die bspw. in der Projektion in Hauptströmungsrichtung 18 der Eintrittsöffnung 21 liegt. Die Messgehäuseinnenwand 87 ist auf jeden Fall in der Nähe der Ausscheidungsöffnung 33 angeordnet.

Der Keil 72 hat in einem Schnitt senkrecht zur Mittelachse 12 bspw. einen dreiecksförmigen Querschnitt. Seitenflächen 78 des Keils 72 können aber auch konkav gekrümmt sein.

Am strömungsaufwärtigen Ende des Keils 72 ist beispielsweise zumindest eine Spitze 75 vorhanden. Durch den Keil 72 und/oder die Spitze 75 wird verhindert, dass sich Wasser oder Festkörperpartikel an einer Stauwand, d.h. an einer Messgehäuseinnenwand 87 nach dem Stand der Technik ohne Keil im strömungsabwärtigen Bereich 28 ansammeln können, weil der Keil 72 und/oder die Spitze 75 verhindert, dass sich ein Wandfilm bilden kann. Ebenfalls erfolgt durch den Keil 78 eine Umlenkung der Wasser- oder Festkörperpartikel zu den Ausscheidungsöffnungen 33.

Weiterhin wird durch die Einstellung eines Sogeffekts erreicht, dass Wasser und/oder Festkörperpartikel verstärkt aus den strömungsabwärtigen Ende 28 des Eingangsbereichs 27 herausgesaugt werden. Dies geschieht unter anderem dadurch, dass an einer äusseren Seitenfläche 81 des Messgehäuses 6 strömungsaufwärts der Ausscheidungsöffnung 33 zumindest ein Vorsprung 84 an der Seitenfläche 81 ausgebildet ist. Die äussere Fläche des Vorsprungs 84 ist bspw. stromlinienförmig oder gekrümmt ausgebildet.

Der Vorsprung ist im Bereich der Ausscheidungsöffnung 33 so ausgestaltet, dass ein Unterdruckgebiet (Ablösen) erzeugt wird und damit eine Sogwirkung auf die Strömung im strömungsabwärtigen Bereich 28 des Eingangsbereichs 27 vorhanden ist.

Ein Ausscheidungskanal 90 im strömungsabwärtigen Bereich 28 zu jeder Ausscheidungsöffnung 33 hin ist dabei bspw. so ausgestaltet, dass er eine Beschleunigung der Strömung im strömungsabwärtigen Bereich 28 bewirkt.

Die Messgehäuseinnenwand 87 weist bspw. im Bereich der Ausscheidungsöffnung 33 eine Fase 93 in Strömungsrichtung geneigt auf, die die Fläche der Meßgehäuseinnenwand 87 verringert, an der sich Wasser und/oder Festkörperpartikel anlagern können.

Die Ausscheidungsöffnung 33 kann mit der Hauptströmungsrichtung 18 jeden beliebigen Winkel bilden. Dies kann beispielsweise dadurch eingestellt werden, dass eine Dicke d des Messgehäuses 6 am strömungsabwärtigen Ende der Ausscheidungsöffnung 33, die senkrecht zur Mittelachse 12 und senkrecht zur Strömungsrichtung 18 verläuft bezüglich einer in gleicher Richtung verlaufenden Ausdehnung a des Messgehäuses 6 strömungsaufwärts der Ausscheidungsöffnung 33 gezielt eingestellt wird.

## Patentansprüche

1. Vorrichtung zur Bestimmung zumindest eines Parameters eines in einer Leitung (3) strömenden Mediums, insbesondere der Ansaugluftmasse einer Brennkraftmaschine,
das eine Hauptströmungsrichtung (18) aufweist, mit einem Messgehäuse (6) und einem Trägerteil, wobei das Messgehäuse (6) mit dem Trägerteil in eine Wandung der Leitung (3) durch eine Einstecköffnung steckbar eingeführt ist, wobei das Messgehäuse (6) und das Trägerteil eine gemeinsame Längsachse in einer axialen Richtung (12) haben, die in Einbaurichtung der Vorrichtung (1) in die Leitung (3) verläuft, mit zumindest einem vom strömenden Medium umströmten Messelement (9), mit einem Bypasskanal (24), der zumindest eine mit der Leitung (3) verbundene Eintrittsöffnung (21) und zumindest eine in die Leitung (3) mündende Austrittsöffnung (54) aufweist und wobei der Bypasskanal (24) einen Messkanal (30) aufweist, in dem das Messelement (9) angeordnet ist, wobei der Messkanal (30) strömungsabwärts der Eintrittsöffnung (21) einen Eingangsbereich (27) hat, **dadurch gekennzeichnet, dass** das strömende Medium sich im Eingangsbereich (27) vollständig in zwei Teilströme aufteilt, und dass der erste Teilstrom vollständig in den Messkanal (30) strömt, und dass der zweite Teilstrom vollständig durch zumindest eine Ausscheidungsöffnung (33) strömt, dass die Eintrittsöffnung (21) in der axialen Richtung (12), die senkrecht zur Hauptströmungsrichtung (18) ist, eine obere Begrenzung (36) hat, die dem Messelement (9) am nächsten ist, und dass eine obere Ebene (39), die senkrecht zur axialen Richtung (12) und parallel zur Hauptströmungsrichtung (18) liegt, durch die obere Begrenzung (36) der Eintrittsöffnung (21) verläuft, und der Bypasskanal (24) im Bereich der Eintrittsöffnung (21) durch eine Umlenkverjüngung (38) mittels einer Nase (37) so gestaltet ist, dass das einströmende Medium von der oberen Ebene (39) weggelenkt wird, derart dass die Flüssigkeits- und/oder Festkörperteilchen, die grösser sind und eine höhere Dichte als das strömende Medium aufweisen, sich in axialer Richtung (12) von der oberen Ebene (39) wegbewegen und dass die Ausscheidungsöffnung (33) unterhalb der oberen Ebene (39) angeordnet ist, um die Flüssigkeits- und Festkörperpartikel im Bereich der Ausscheidungsöffnung (33) zu sammeln.

2. Vorrichtung nach Anspruch 1,
**dadurch gekennzeichnet, dass**
der Bypasskanal (24) in oder strömungsabwärts der Eintrittsöffnung (21) zumindest eine Trennstelle (66) aufweist.

3. Vorrichtung nach Anspruch 1,
**dadurch gekennzeichnet, dass**
im Eingangsbereich (27) eine Abrisskante (60) vorhanden ist.

4. Vorrichtung nach Anspruch 1,
**dadurch gekennzeichnet, dass**
sich der Messkanal (30) im Bereich des Messelements (9) verjüngt.

5. Vorrichtung nach Anspruch 1,
**dadurch gekennzeichnet, dass**
die Ausscheidungsöffnung (33) den Eingangsbereich (27) mit der Leitung (3) verbindet.

6. Vorrichtung nach Anspruch 1,
**dadurch gekennzeichnet,**
**dass** sich an den Messkanal (30) ein Umlenkkanal (51) anschließt, und
**dass** die Ausscheidungsöffnung (33) den Eingangsbereich (27) mit dem Umlenkkanal (51) verbindet.

7. Vorrichtung nach Anspruch 1,
**dadurch gekennzeichnet, dass**
die Ebene, in der die Ausscheidungsöffnung (33) liegt, unter einem von null Grad verschiedenen Winkel zur Hauptströmungsrichtung (18) angeordnet ist.

8. Vorrichtung nach Anspruch 1,
**dadurch gekennzeichnet, dass**
die Hauptströmungsrichtung (18) in der Ebene verläuft, in der die Ausscheidungsöffnung (33) liegt.

9. Vorrichtung nach Anspruch 1,
**dadurch gekennzeichnet, dass**
die Hauptströmungsrichtung (18) in der Ebene der Austrittsöffnung (54) verläuft.

10. Vorrichtung nach Anspruch 1,
**dadurch gekennzeichnet, dass**
die Ebene der Austrittsöffnung (54) unter einem von null Grad verschiedenen Winkel zur Hauptströmungsrichtung (18) in die Leitung (3) angeordnet ist.

11. Vorrichtung nach Anspruch 1 oder 6,
**dadurch gekennzeichnet,**
**dass** sich an den Messkanal (30) ein Umlenkkanal (51) anschließt, und
**dass** der Messkanal (30) und der Umlenkkanal (51) C-förmig ausgebildet sind, wobei die Öffnung der C-Form der Hauptströmungsrichtung (18) zugewandt ist.

12. Vorrichtung nach Anspruch 1,
**dadurch gekennzeichnet,**
**dass** der Eingangsbereich (27) einen strömungsabwärtigen Bereich (28) aufweist, und
**dass** in dem strömungsabwärtigen Bereich (28) zumindest ein Keil (72) angeordnet ist.

13. Vorrichtung nach Anspruch 12,
**dadurch gekennzeichnet, dass**
der Keil (72) am strömungsaufwärtigen Ende zumindest eine Spitze (75) aufweist.

14. Vorrichtung nach Anspruch 1,
**dadurch gekennzeichnet,**
**dass** der Bypasskanal (24) in einem Messgehäuse (6) angeordnet ist, und
**dass** an zumindest einer äußeren Seitenfläche (81) des Messgehäuses (6) zumindest ein Vorsprung (84) strömungsaufwärtig der Ausscheidungsöffnung (33) angeordnet ist.

15. Vorrichtung nach Anspruch 1, **dadurch gekennzeichnet,**
**dass** die Hauptströmungsrichtung (18) in der Ebene der Ausscheidungsöffnung (33) verläuft.

16. Vorrichtung, nach Anspruch 1, **dadurch gekennzeichnet,**
**dass** die Hauptströmungsrichtung (18) mit der Ausscheidungsöffnung (33) einen von Null verschiedenen Schnittwinkel bildet.

17. Vorrichtung nach Anspruch 12 oder 13,
**dadurch gekennzeichnet, dass**
der Keil (72) im Querschnitt dreiecksförmig ausgebildet ist.

18. Vorrichtung nach Anspruch 12 oder 13,
**dadurch gekennzeichnet, dass**
Seitenflächen (78) des Keils (72) konkav gekrümmt sind.

19. Vorrichtung nach Anspruch 1, **dadurch gekennzeichnet,**
**dass** eine Messeghäuseinnenwand (87) im Bereich der Ausscheidungsöffnung (33) eine Fase (93) hat.

## Claims

1. Device for determining at least one parameter of a medium flowing in a line (3), in particular the intake-air mass of an internal combustion engine, which medium has a main flow direction (18), having a measurement housing (6) and having a carrier part, wherein the measurement housing (6) with the carrier part is introduced into a wall of the line (3) in a manner insertable through an insertion opening, wherein the measurement housing (6) and the carrier part have a common longitudinal axis in an axial direction (12) which runs in the installation direction of the device (1) into the line (3), having at least one measurement element (9) around which the flowing medium flows, having a bypass duct (24) which has at least one inlet opening (21) connected to the line (3) and which has at least one outlet opening (54) which opens into the line (3), and wherein the bypass duct (24) has a measurement duct (30) in which the measurement element (9) is arranged, wherein the measurement duct (30) has an admission region (27) downstream of the inlet opening (21), **characterized in that** the flowing medium is, in the admission region (27), divided entirely into two partial streams, and **in that** the first partial stream flows entirely into the measurement duct (30), and **in that** the second partial flow flows entirely through at least one discharge opening (33), **in that** the inlet opening (21) has, in the axial direction (12) which is perpendicular to the main flow direction (18), an upper delimitation (36) which is situated closest to the measurement element (9), and **in that** an upper plane (39) which lies perpendicular to the axial direction (12) and parallel to the main flow direction (18) runs through the upper delimitation (36) of the inlet opening (21), and the bypass duct (24), in the region of the inlet opening (21), is configured, by way of a diverting constriction (38) realized by means of a lug (37), such that the inflowing medium is diverted away from the upper plane (39), in such a way that the liquid and/or solids particles which are relatively large and which have a higher density than the flowing medium move in the axial direction (12) away from the upper plane (39), and **in that** the discharge opening (33) is arranged below the upper plane (39) in order to collect the liquid and solids particles in the region of the discharge opening (33).

2. Device according to Claim 1,
**Characterized in that**
the bypass duct (24) has at least one separation point (66) in or downstream of the inlet opening (21).

3. Device according to Claim 1,
**characterized in that**
a flow-separation edge (60) is provided in the admission region (27).

4. Device according to Claim 1,
**characterized in that**
the measurement duct (30) narrows in the region of the measurement element (9).

5. Device according to Claim 1,
**characterized in that**
the discharge opening (33) connects the admission region (27) to the line (3).

6. Device according to Claim 1,
**characterized**
**in that** a diverting duct (51) adjoins the measurement duct (30), and
**in that** the discharge opening (33) connects the admission region (27) to the diverting duct (51).

7. Device according to Claim 1,
**characterized in that**
the plane in which the discharge opening (33) lies is arranged at an angle, which differs from zero degrees, with respect to the main flow direction (18).

8. Device according to Claim 1,
**characterized in that**
the main flow direction (18) runs in the plane in which the discharge opening (33) lies.

9. Device according to Claim 1,
**characterized in that**
the main flow direction (18) runs in the plane of the outlet opening (54).

10. Device according to Claim 1,
**characterized in that**
the plane of the outlet opening (54) runs at an angle, which differs from zero degrees, with respect to the main flow direction (18) in the line (3).

11. Device according to Claim 1 or 6,
**characterized**
**in that** the measurement duct (30) is adjoined by a diverting duct (51), and
**in that** the measurement duct (30) and the diverting duct (51) are of C-shaped form, wherein the opening of the C shape faces toward the main flow direction (18).

12. Device according to Claim 1,
**characterized**
**in that** the admission region (27) has a downstream region (28), and
**in that** at least one wedge (72) is arranged in the downstream region (28).

13. Device according to Claim 12,
**characterized in that**
the wedge (72) has at least one tip (75) at the upstream end.

14. Device according to Claim 1,
**characterized**
**in that** the bypass duct (24) is arranged in a measurement housing (6), and
**in that** at least one projection (84) is arranged, upstream of the discharge opening (33), on at least one outer side surface (81) of the measurement housing (6).

15. Device according to Claim 1, **characterized**
**in that** the main flow direction (18) runs in the
plane of the discharge opening (33).

16. Device according to Claim 1, **characterized**
**in that** the main flow direction (18) forms an angle of intersection, which differs from zero, with the discharge opening (33).

17. Device according to Claim 12 or 13,
**characterized in that**
the wedge (72) is of triangular form in cross section.

18. Device according to Claim 12 or 13,
**characterized in that**
side surfaces (78) of the wedge (72) are concavely curved.

19. Device according to Claim 1, **characterized**
**in that** a measurement housing inner wall (87) has a bevel (93) in the region of the discharge opening (33).

## Revendications

1. Dispositif destiné à déterminer au moins un paramètre d'un fluide circulant dans un conduit (3), notamment la masse d'air aspirée d'un moteur à combustion interne,
qui comporte une direction principale d'écoulement (18), avec un boîtier de mesure (6) et une partie porteuse, par la partie porteuse, le boîtier de mesure (6) étant introduit de manière enfichable dans une paroi du conduit (3) à travers un orifice d'enfichage, le boîtier de mesure (6) et la partie porteuse présentant dans une direction axiale (12) un axe longitudinal commun, qui dans la direction de montage du dispositif (1) s'étend dans le conduit (3), avec au moins un élément de mesure (9) entouré par du fluide en circulation, avec un canal de dérivation (24) qui comporte au moins un orifice d'entrée (21) relié avec le conduit (3) et au moins un orifice de sortie (54) débouchant dans le conduit (3) et le canal de dérivation (24) comportant un canal de mesure (30) dans lequel est placé l'élément de mesure (9), en aval de l'orifice d'entrée (21), le canal de mesure (30) comportant une zone d'entrée (27), **caractérisé en ce que** dans la zone d'entrée (27), le fluide circulant se répartit totalement en deux flux partiels et **en ce que** le premier flux partiel s'écoule en totalité dans le canal de mesure (30) et **en ce que** le deuxième flux partiel s'écoule en totalité à travers au moins un orifice de séparation (33), **en ce que** dans la direction axiale (12) qui est perpendiculaire à la direction principale d'écoulement (18), l'orifice d'entrée (21) présente une délimitation supérieure (36) qui est la plus proche de l'élément de mesure (9) et **en ce qu'**un plan supérieur (39) qui se situe à la perpendiculaire de la direction axiale (12) et à la parallèle de la direction principale d'écoulement (18) s'étend à travers la délimitation supérieure (36) de l'orifice d'entrée (21) et **en ce que** dans la zone de l'orifice d'entrée (21), par un rétrécissement de renvoi (38), au moyen d'un tenon (37), le canal de dérivation (24) est conçu de telle sorte que le fluide pénétrant soit détourné du plan supérieur (39), de sorte que les particules de liquide et/ou de solides qui sont plus grandes et qui présentent une densité plus élevée que le fluide en circulation se déplacent en direction axiale (12) en s'éloignant du plan supérieur (39) et **en ce que** l'orifice de séparation (33) est placé en-dessous du plan supérieur (39), pour collecter les particules de liquide et de solides dans la zone de l'orifice de séparation (33).

2. Dispositif selon la revendication 1,
**caractérisé en ce que**
dans ou en aval de l'orifice d'entrée (21), le canal de dérivation (24) comporte au moins un endroit de séparation (66).

3. Dispositif selon la revendication 1,
**caractérisé en ce que**
dans la zone d'entrée (27), une arête déchirable (60) est présente.

4. Dispositif selon la revendication 1,
**caractérisé en ce que**
le canal de mesure (30) se rétrécit dans la zone de l'élément de mesure (9).

5. Dispositif selon la revendication 1,
**caractérisé en ce que**
l'orifice de séparation (33) relie la zone d'entrée (27) avec le conduit (3).

6. Dispositif selon la revendication 1,
**caractérisé en ce que**
sur le canal de mesure (30) se raccorde un canal de renvoi (51) et
**en ce que** l'orifice de séparation (33) relie la zone d'entrée (27) avec le canal de renvoi (51).

7. Dispositif selon la revendication 1,
**caractérisé en ce que**
le plan dans lequel se situe l'orifice de séparation (33) est placé sous un angle différent de zéro degrés par rapport à la direction principale d'écoulement (18).

8. Dispositif selon la revendication 1,
**caractérisé en ce que**
la direction principale d'écoulement (18) s'étend dans le plan dans lequel se situe l'orifice de séparation (33).

9. Dispositif selon la revendication 1,
**caractérisé en ce que**
la direction principale d'écoulement (18) s'étend dans le plan de l'orifice de sortie (54).

10. Dispositif selon la revendication 1,
**caractérisé en ce que**
le plan de l'orifice de sortie (54) est placé dans le conduit (3) sous un angle différent de zéro degrés par rapport à la direction principale d'écoulement (18).

11. Dispositif selon la revendication 1 ou la revendication 6,
**caractérisé en ce**
**qu'**au canal de mesure (30) se raccorde un canal de renvoi (51) et,
en ce que le canal de mesure (30) et le canal de renvoi (51) sont conçus en forme de C, l'ouverture de la forme de C faisant face à la direction principale d'écoulement (18).

12. Dispositif selon la revendication 1,
**caractérisé en ce que**
la zone d'entrée (27) comporte une zone (28) en aval et
**en ce que** dans la zone (28) en aval est placée au moins une clavette (72).

13. Dispositif selon la revendication 12,
**caractérisé en ce que**
sur l'extrémité en amont, la clavette (72) comporte au moins une pointe (75).

14. Dispositif selon la revendication 1,
**caractérisé en ce que**
le canal de dérivation (24) est placé dans un boîtier de mesure (6), et
**en ce que** sur au moins une surface latérale (81) extérieure du boîtier de mesure (6), au moins une saillie (84) est placée en amont de l'orifice de séparation (33).

15. Dispositif selon la revendication 1, **caractérisé en ce que**
la direction principale d'écoulement (18) s'étend dans le plan de l'orifice de séparation (33).

16. Dispositif selon la revendication 1,
**caractérisé en ce que**
la direction principale d'écoulement (18) forme avec l'orifice de séparation (33) un angle de coupe différent de zéro.

17. Dispositif selon la revendication 12 ou la revendication 13,
**caractérisé en ce que**
dans la section transversale, la clavette (72) est conçue en forme de triangle.

18. Dispositif selon la revendication 12 ou la revendication 13,
**caractérisé en ce que**
des surfaces latérales (78) de la clavette (72) sont recourbées de manière concave.

19. Dispositif selon la revendication 1,
**caractérisé en ce que**
dans la zone de l'orifice de séparation (33), une paroi intérieure (87) du boîtier de mesure présente un chanfrein (93).
